# EUROPEAN PATENT SPECIFICATION

(11) **EP 2 904 896 B1**
(45) Date of publication and mention of the grant of the patent: **25.01.2017**
(21) Application number: 14446502.8
(22) Date of filing: 10.02.2014
(51) Int. Cl.: A01G 23/099

(54) **Fastener for a measurement caliper**
Festhaltung für eine Messkluppe
Fixation pour un calibre à coulisse

(30) Priority: 07.02.2014 SE 1450134
(43) Date of publication of application: 12.08.2015
(73) Proprietor: Haglöf Sweden AB, 882 21 Langsele (SE)
(72) Inventor: Haglöf, Stefan, 882 93 HELGUM (SE)
(74) Representative: Örtenblad, Bertil Tore

(56) References cited:
- DE-U1-202004 009 153
- GB-A- 2 284 344
- US-A1- 2008 209 750

## Description

The present invention relates to a fastener in a harvester for a measurement caliper.

During deforestation a so called harvester, in other words machines for felling and cutting trees, is often used. Many times, the operator of the harvester needs to measure diameters of trunks, whereby he uses a so called caliper (Swedish "klave"). A caliper can be likened to a large vernier caliper. Calipers are electronic for reading of trunk diameters, and arranged to store measured values. Such calipers are well-known, see for example US2008/209750 A1, that's why they are not described in closer detail herein.

The caliper is to be firmly fastened in a holder device in the cab of the harvester, and at the same time be easily removable and refastenable.

The harvester has a measurement system for measuring the diameters and lengths of the trunks. For each felled tree its diameters and length are measured. The diameter of the trunk is measured at several locations along the trunk. This results in that the volume of harvested timber is measured.

The measurement system of the harvester must be calibrated. This is done using the caliper. A calibration begins by the measurement system of the harvester measuring the diameters and the length of a trunk. These data are fed into the measurement system of the harvester and on to the measurement system of the caliper. Thereafter, the operator of the harvester removes the caliper and measures the diameters of the same trunk using the caliper. Also the length of the trunk is measured by the operator. These measurement values are fed into the measurement systems of the harvester and the caliper, respectively. In case the measurement values from the measurement using the measurement system of the harvester do not coincide with the measurement using the measurement values from the measurement using the caliper, a correction of the measurement system of the harvester takes place. Correspondingly, a calibration is performed regarding the length of the trunk. The calibration method is performed by measuring a number of trunks. Moreover, the calibration method can be repeated several times per working shift.

It is desired for the caliper to be easily removable from its fastener and required electrical connections, and that the caliper easily can be fastened in its fastener and be connected to the electrical connections, using only one hand.

The present invention fulfills this objective.

The present invention relates to a fastener in a harvester for a measurement caliper for measuring of the diameter of trees, which caliper comprises a ruler with a fixed and a movable shank and a housing arranged by the fixed shank, which housing contains electronics for a measurement system belonging to the caliper as well as a display, and is characterized in that the fastener comprises a first and a second U-shaped respective fastening means, arranged at a distance from each other, as well as a third U-shaped fastening means in which the U is located perpendicularly to the U:s of the first and second fastening means, respectively, in that the third fastening means is located outside a line through the first and second fastening means and beyond one of the first and second fastening means, in that the first and second fastening means have respective inner dimensions that correspond to the outer dimensions of the caliper's ruler, and are arranged so that the caliper's ruler can abut against the respective bottom of the first and second fastening means, in that the third fastening means has an inner width that corresponds to the total width of the shanks or their fastening arrangement when these are translated into abutment against one another.

Below, the invention is described in closer detail, partly in connection to an exemplifying embodiment of the invention which is shown in the enclosed drawings, wherein
- Figures 1a - 1c show a sequence with a caliper in different pivot positions
- Figures 2a - 2c show, in cross-section, the same as is shown in figures 1a - 1c
- Figure 3 is a drawing with indicated dimensions of a section according to figures 2a - 2c
- Figure 4 shows a part of a caliper with a fastener according to the invention in a perspective view in a pivot position
- Figure 5 shows a part of a caliper with a fastener according to the invention in a perspective view in a different pivot position than the one shown in figure 4
- Figure 6 shows a part of a caliper and a fastener.

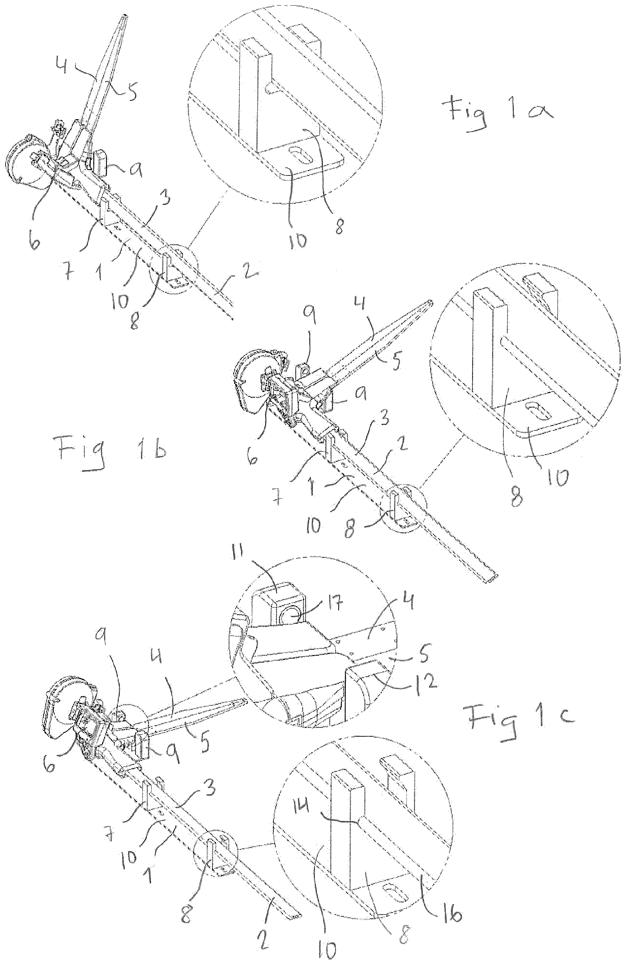

In figures 1a - 1c, a fastener 1 is shown in a harvester for a measurement caliper 2 for measuring of the diameter of trees. The caliper 2, which is known as such, comprises a ruler 3 with a fixed 4 and a movable 5 shank, which is movable along the ruler 3. Furthermore, the caliper 2 comprises a housing 6 arranged by the fixed shank 4, which housing 6 contains electronics for a measurement system belonging to the caliper, as well as a display.

According to the invention, the fastener comprises a first 7 and a second 8 U-shaped respective fastening means, arranged at a distance from each other, as well as a third U-shaped fastening means 9. The first and the second fastening means are fastened in a rail 10. Within the circle in figures 1a - 1c is shown one part of the second fastening means and the rail to a larger scale.

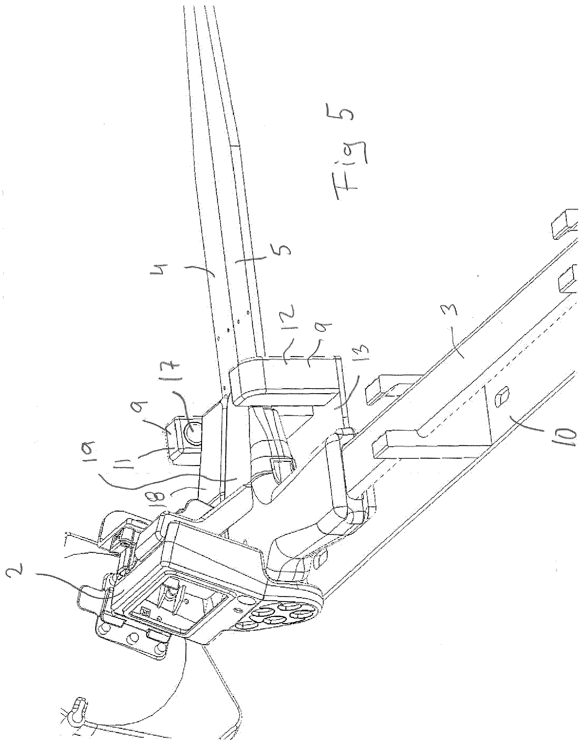

The U of the third fastening means 9 is located perpendicularly to the U:s of the first and second fastening means 7, 8, respectively. Moreover, the third fastening means 9 is located outside a line through the first and second fastening means and beyond one of the first and second fastening means. The third fastening means is best viewed in figure 5. The third fastening means 9 comprises two upwards protruding parts 11, 12, that are fastened to a protruding part 13 of the rail 10, in the plane of the rail. The protruding parts 11, 12, together with the part 13, form the said U-shape.

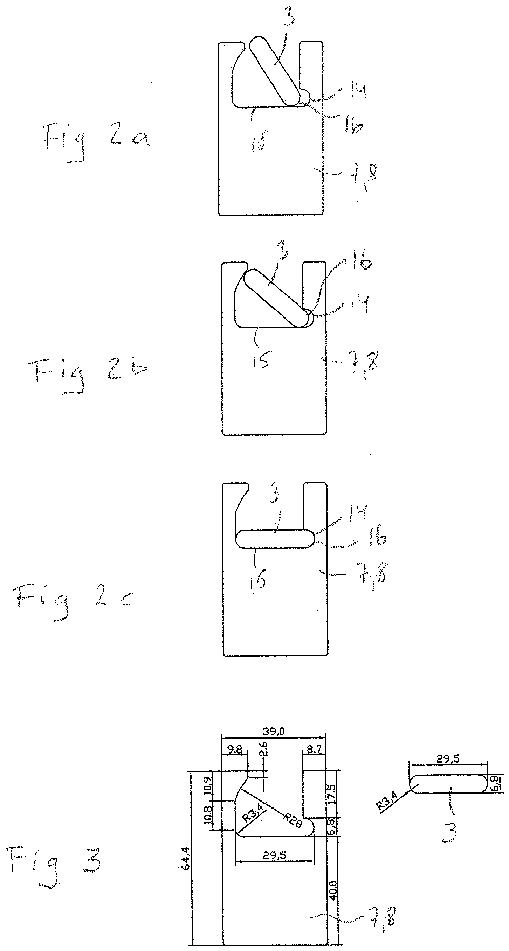

The first 7 and second 8 fastening means have respective inner dimensions that correspond to the outer dimensions of the caliper's 2 ruler 3, and are arranged so that the caliper's ruler 3 can abut against the respective bottom 15 of the first and second fastening means, which is illustrated in figure 2c.

According to a preferred embodiment, the first 7 and the second 8 fastening means, respectively, has a recess 14 at one side of its bottom 15, which recess is arranged to receive one longitudinal edge 16 of the caliper's 1 ruler 3. According to a preferred embodiment, the said recess 14 is positioned on the opposite side of the fastening means 1 in relation to where the third fastening means 9 is arranged.

According to another preferred embodiment, the first and the second fastening means, respectively, is arranged to receive the ruler by using a pivoting movement, which is illustrated in figures 2a-2c.

The third fastening means 9 has an inner width that corresponds to the total width of the shanks 4, 5, or their fastening arrangement, when these are translated into abutment against one another.

According to a preferred embodiment, the third fastening means 9 is provided with a ball 17, which is spring-loaded against a spring force, in either one, or both, of the protruding parts 11, 19 of the U, where the ball 17 or balls faces inwards into the U. The distance from a ball 17 to the bottom of the U of the third fastening means 9 corresponds to the total thickness of the shanks 4, 5, or their fastening arrangement 18, 19 to the caliper, when these 4, 5 are translated into abutment against each other, see figure 5.

The caliper 2 is fastened to the fastener in a way so that the ruler is placed in the first and the second fastening means, see figure 2a, after which the ruler performs a pivoting movement, see figures 2b and 2c, until the ruler 2 abuts against the bottom of the first and the second fastening means, see figure 2c.

In order for the ruler to be able to come into abutment against the bottom of the fastening means 7, 8, 9, the shanks 4, 5 must pass the said ball 17 or balls, which takes place by the ball or balls give away.

As is clear from for example figure 1c, the edge 16 of the ruler is held by the recess, at the same time as the caliper is held in a fixed position of the opposite third fastening means using the ball 17 or balls.

Hence, it is very simple to fasten the caliper using a simple single hand grip, by bringing the caliper into the first and second fastening means, and thereafter performing the said pivoting movement so that the shanks pass the ball or balls.

Removal of the caliper takes place using a reverse pivoting movement, which can also be performed simply using only one hand.

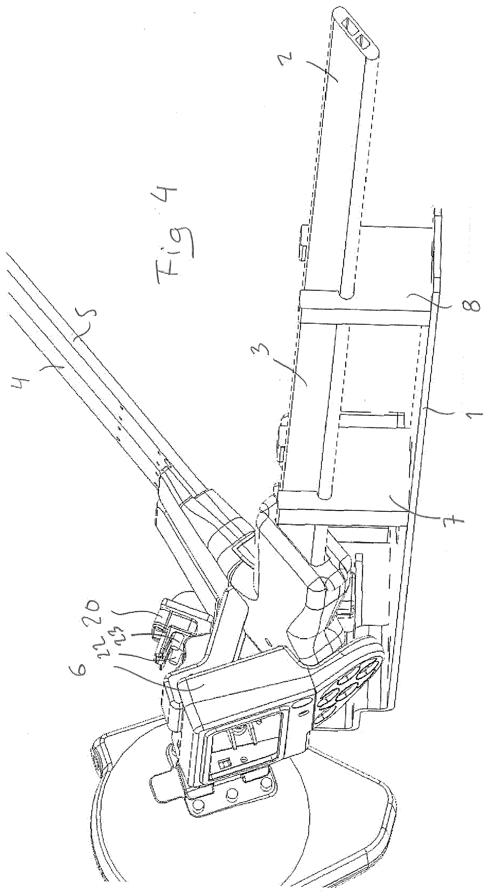

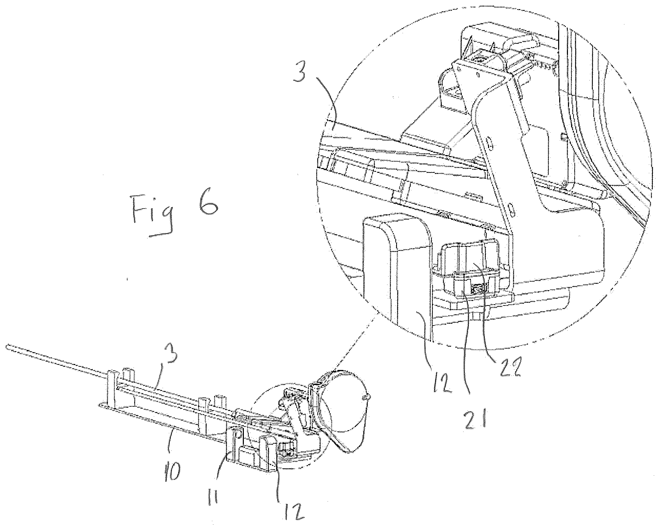

According to a very preferred embodiment, the fastener 1 is provided with two electrical male connection means 20, 21, see figures 4 and 6, arranged to cooperate with two female connection means in or at the said housing 6. In figure 4, two male connectors 22, 23 are shown in the connection means 20. The male connectors for the second connection means 21 is located behind the wall 22 in figure 6. The respective connection means 20, 21 are arranged to come into contact with each other when the caliper 2, by using a pivoting movement, is brought to a position in which it abuts against the bottom of the third fastening means 9. A first of the connection means provides electric power to the caliper, and the second connection means connects the measurement system of the caliper to the measurement system of the harvester.

Through this embodiment, the caliper will at the same time be fastened and connected to the measurement system of the harvester using one simple hand grip.

Hence, the present invention fulfills the initially mentioned objective.

Above, a number of embodiments have been described. However, it is apparent that the detailed design of the fastening means can be varied, as well as the positioning of the same. Furthermore the positioning of the connection means can be varied.

Therefore, the present invention is not to be perceived as limited to the above described embodiments, but may be varied within the scope of the enclosed claims.

## Claims

1. Fastener in a harvester for a measurement caliper for measuring of the diameter of trees, which caliper (2) comprises a ruler (3) with a fixed and a movable shank (4,5) and a housing (6) arranged by the fixed shank, which housing (6) contains electronics for a measurement system belonging to the caliper as well as a display, **characterized in that** the fastener (1) comprises a first (7) and a second (8) U-shaped respective fastening means, arranged at a distance from each other, as well as a third (9) U-shaped fastening means in which the U is located perpendicularly to the U:s of the first (7) and second (8) fastening means, respectively, **in that** the third fastening means (9) is located outside a line through the first and second fastening means and beyond one of the first and second fastening means, **in that** the first (7) and second (8) fastening means have respective inner dimensions that correspond to the outer dimensions of the caliper's ruler (3), and are arranged so that the caliper's ruler (3) can abut against the respective bottom (15) of the first (7) and second (8) fastening means, **in that** the third fastening means (9) has an inner width that corresponds to the total width of the shanks (4,5), or their fastening arrangement, when these are translated into abutment against one another.

2. Fastener according to claim 1, **characterized in that** the first (7) and the second (8) fastening means, respectively, has a recess (14) at one side of its bottom (15), which recess is arranged to receive one longitudinal edge (16) of the caliper's ruler (3).

3. Fastener according to claim 2, **characterized in that** the first (7) and the second (8) fastening means, respectively, is arranged to receive the ruler (3) by using a pivoting movement.

4. Fastener according to claim 1, 2 or 3, **characterized in that** the third fastening means (9) is provided with a spring-loaded ball (17) in either one, or both, of the protruding walls (11,12) of the U, **in that** the ball (17) faces inwards into the U of the fastening means, and **in that** the distance from the ball to the bottom of the U corresponds to the total thickness of the shanks (4,5), or their fastening arrangement, when these are translated into abutment against each other.

5. Fastener according to claim 1, 2, 3 or 4, **characterized in that** the fastener is provided with two electrical male connection means (20,21) arranged to cooperate with two female connection means in or at the said housing (6), and **in that** the respective connection means (20,21) are arranged to come into contact with each other when the caliper (2), by using a pivoting movement, is brought to a position in which it abuts against the bottom of the third fastening means (9).

6. Fastener according to claim 1, 2, 3, 4 or 5, **characterized in that** the said recesses (14) are located on the opposite side of the fastener (1) in relation to the location in which the said third fastening means (9) is arranged.

## Patentansprüche

1. Befestigungsvorrichtung in einer Holzerntemaschine für eine Messkluppe zum Messen des Durchmessers von Bäumen, wobei die Messkluppe (2) ein Lineal (3) mit einem fixierten und einem bewegbare Schenkel (4, 5) und ein Gehäuse (6) umfasst, das bei dem fixierten Schenkel angeordnet ist, wobei das Gehäuse (6) Elektronik für ein Messsystem, das zur Messkluppe gehört, sowie eine Anzeige aufweiset, **dadurch gekennzeichnet, dass** die Befestigungsvorrichtung (1) ein erstes (7) und zweites (8) jeweils U-förmiges Befestigungsmittel umfasst, das in einem Abstand voneinander angeordnet ist, sowie ein drittes (9) U-förmiges Befestigungsmittel, in welchem das U orthogonal zu den U:s des ersten (7) bzw. zweiten (8) Befestigungsmittel platziert ist, so dass das dritte Befestigungsmittel (9) außerhalb einer Linie durch das erste und zweite Befestigungsmittel und jenseits von einem der ersten und zweiten Befestigungsmittel platziert ist, wobei das erste (7) und zweite (8) Befestigungsmittel jeweils Innenmaße haben, die zu den Außenmaßen des Lineals (3) der Messkluppe korrespondieren, und so angeordnet sind, dass das Lineal (3) der Messkluppe gegen den jeweiligen Boden (15) des ersten (7) und zweiten (8) Befestigungsmittels anliegen kann, wobei das dritte Befestigungsmittel (9) eine Durchgangsbreite hat, die der Gesamtbreite der Schenkel (4, 5) entspricht, oder deren Befestigungsanordnung, wenn diese in ein Anliegen gegen einander umgesetzt sind.

2. Befestigungsvorrichtung nach Anspruch 1, **dadurch gekennzeichnet, dass** das erste (7) bzw. zweite (8) Befestigungsmittel eine Aussparung (14) an einer Seite dessen Bodens (15) aufweiset, wobei die Aussparung (14) zum Aufnehmen einer Längskante (16) des Lineals (3) der Messkluppe eingerichtet ist.

3. Befestigungsvorrichtung nach Anspruch 2, **dadurch gekennzeichnet, dass** das erste (7) bzw. zweite (8) Befestigungsmittel zum Aufnehmen des Lineals (3) durch Nutzung einer Drehbewegung eingerichtet ist.

4. Befestigungsvorrichtung nach Anspruch 1, 2 oder 3, **dadurch gekennzeichnet, dass** das dritte Befestigungsmittel (9) mit einer federbelasteten Kugel (17) in einer der, oder beiden der, vorstehenden Wände (11, 12) des U vorgesehen ist, wobei die Kugel (17) nach innen in das U des Befestigungsmittels gesandt ist, und wobei der Abstand von der Kugel zu dem Boden des U mit der Gesamtdicke der Schenkel (4, 5) korrespondiert, oder mit deren Befestigungsanordnung, wenn diese in ein Anliegen gegen einander umgesetzt sind.

5. Befestigungsvorrichtung nach Anspruch 1, 2, 3 oder 4, **dadurch gekennzeichnet, dass** die Befestigungsvorrichtung mit zwei elektrischen Steckverbindungsmitteln (20, 21) vorgesehen ist, die zum Zusammenwirken mit zwei Buchsenverbindungsmitteln in oder an dem Gehäuse (6) eingerichtet sind, und wobei die jeweilige Steckverbindungsmittel (20, 21) dazu eingerichtet sind, miteinander in Kontakt zu kommen, wenn die Messkluppe (2), durch Nutzen der Drehbewegung, in eine Position gebracht wird, in der sie gegen den Boden des dritten Befestigungsmittels (9) anliegt.

6. Befestigungsvorrichtung nach Anspruch 1, 2, 3, 4 oder 5, **dadurch gekennzeichnet, dass** die Aussparungen (14) platziert sind an der gegenüberliegenden Seite der Befestigungsvorrichtung (1) in Bezug auf die Stelle, in welcher das dritte Befestigungsmittel (9) angeordnet ist.

## Revendications

1. Système de fixation monté dans une moissonneuse pour un pied à coulisse permettant de mesurer le diamètre d'arbres, ce pied à coulisse (2) comprenant une réglette (3) équipée une tige fixe et une tige mobile (4, 5) ainsi qu'un boîtier (6) installé sur la tige fixe, ce boîtier (6) renfermant une électronique destinée à un système de mesure faisant partie du pied à coulisse ainsi qu'un affichage,
**caractérisé en ce que**
le système de fixation (1) comprend un premier moyen de fixation (7) et un second moyen de fixation (8) respectivement en forme de U situés à distance l'un de l'autre, ainsi qu'un troisième moyen de fixation en forme de U (9) dans lequel le U est perpendiculaire aux U du premier moyen de fixation (7) et du second moyen de fixation (8), **en ce que** le troisième moyen de fixation (9) est situé à l'extérieur d'une droite passant par le premier moyen de fixation et le second moyen de fixation et au-delà d'un moyen de fixation parmi le premier et le second moyens de fixation, **en ce que** le premier moyen de fixation (7) et le second moyen de fixation (8) ont des dimensions internes respectives qui correspondent aux dimensions externes de la réglette (3) du pied à coulisse et sont réalisés de sorte que la réglette (3) du pied à coulisse puisse venir en butée contre les bases respectives (15) du premier moyen de fixation (7) et du second moyen de fixation (8), **en ce que** le troisième moyen de fixation (9) a une largeur interne qui correspond à la largeur totale des tiges (4, 5) ou à leur disposition de fixation lorsqu'elles sont déplacées par translation pour être mises en butée l'une contre l'autre.

2. Système de fixation conforme à la revendication 1,
**caractérisée en ce que**
le premier moyen de fixation (7) et le second moyen de fixation (8) ont respectivement une cavité (14) située d'un côté de leur base (15), cette cavité étant réalisée pour recevoir un bord longitudinal (16) de la réglette (3) du pied à coulisse.

3. Système de fixation conforme à la revendication 2,
**caractérisé en ce que**
le premier moyen de fixation (7) et le second moyen de fixation (8) sont respectivement réalisés pour recevoir la réglette (3) en exerçant un mouvement de pivotement.

4. Système de fixation conforme à la revendication 1, 2 ou 3,
**caractérisé en ce que**
le troisième moyen de fixation (9) est équipé d'une bille (17) chargée par ressort sur l'une ou les branches en saillie (11, 12) du U, **en ce que** la bille (17) fait face vers l'intérieur du U du moyen de fixation et **en ce que** la distance entre la bille et la base du U correspond à l'épaisseur totale des tiges (4, 5) ou à leur disposition de fixation lorsqu'elles sont déplacées par translation pour venir en butée l'une contre l'autre.

5. Système de fixation conforme à la revendication 1, 2, 3 ou 4,
**caractérisé en ce qu'**
il est équipé de deux moyens de connexion électriques mâles (20, 21) réalisés pour coopérer avec deux moyens de connexion femelles dans ou sur le boîtier (6) et **en ce que** les moyens de connexion respectifs (20, 21) sont réalisés pour venir en contact l'un avec l'autre lorsque, en exerçant un mouvement de pivotement, le pied à coulisse (2) est mis dans une position dans laquelle il vient en butée contre la base du troisième moyen de fixation (9).

6. Système de fixation conforme à la revendication 1, 2, 3, 4 ou 5,
**caractérisé en ce que**
les cavités (14) sont situées sur le côté opposé du système de fixation (1) par rapport à la position dans laquelle le troisième moyen de fixation (9) est disposé.
